**Europäisches Patentamt**

**European Patent Office**

**Office européen des brevets**

(19)

(11) Numéro de publication: **0 239 474**
**B1**

(12)

# FASCICULE DE BREVET EUROPEEN

(45) Date de publication du fascicule du brevet:
**24.10.90**

(51) Int. Cl.⁵: **C08F 10/02**, C08F 4/64,
C08F 2/34

(21) Numéro de dépôt: **87400587.9**

(22) Date de dépôt: **17.03.87**

(54) **Catalyseur de polymérisation en phase gazeuse de l'éthylène contenant un composé de phosphore, son procédé de fabrication.**

(30) Priorité: **27.03.86 FR 8604412**

(43) Date de publication de la demande:
**30.09.87 Bulletin 87/40**

(45) Mention de la délivrance du brevet:
**24.10.90 Bulletin 90/43**

(84) Etats contractants désignés:
**AT BE CH DE ES FR GB IT LI LU NL SE**

(56) Documents cités:
**US-A- 3 992 320**

**CHEMICAL ABSTRACTS,
vol. 89, no. 6, août 1978, page 13, résumé no. 44425j,
Columbus, Ohio, US; & JP-A-78 21 286 (SHOWA DENKO
K.K.) 27-02-1978**

(73) Titulaire: **ATOCHEM, 4 & 8, Cours Michelet La
Défense 10, F-92800 Puteaux(FR)**

(72) Inventeur: **Duranel, Laurent, 3, Rue Hameau de Trestoey,
F-64000 Pau(FR)**

(74) Mandataire: **Foiret, Claude et al, ATOCHEM
Département Propriété Industrielle, F-92091 Paris la
Défense 10 Cédex 42(FR)**

ACTORUM AG

## Description

La présente invention concerne un catalyseur Ziegler contenant un composé phosphoré de polymérisation de l'éthylène en phase gazeuse. L'invention concerne également le procédé de fabrication des catalyseurs. Il est entendu que sous le dénomination polymérisation de l'éthylène est compris non seulement l'homopolymérisation de l'éthylène, mais encore la copolymérisation de l'éthylène avec une alpha oléfine, telle que propylène, butène - 1 ou encore hexène - 1.

Les catalyseurs connus sont le résultat de la combinaison d'au moins un composé de métal de transition, d'un composé du magnésium, d'un halogène et éventuellement d'un donneur ou accepteur d'electrons. L'objet de la présente invention consiste à associer à ces différents composants un composé du phosphore, l'ensemble étant supporté sur un matériau inerte organique ou inorganique utilisable dans la polymérisation de l'éthylène. La polymérisation en phase gazeuse de l'éthylène est connue et largement décrite dans l'art antérieur, s'agissant d'une polymérisation en réacteur en lit agité ou fluidisé de l'éthylène gazeux en présence d'hydrogène et de gaz inerte.

L'incorporation de composés organiques comportant au moins une liaison phosphore oxygène dans des combinaisons catalytiques à base de métal de transition et d'halogènure de magnésium a déjà été envisagée. Dans le brevet japonais 52.32985 est décrit un catalyseur de polymérisation de l'éthylène obtenu par cobroyage d'un composé organique phosphoré, de chlorure de magnésium et de tétrachlorure de titane. Ce catalyseur recommandé pour la polymérisation en suspension présente l'inconvénient, du fait de son mode de préparation et de sa structure non supportée, de posséder une morphologie et une granulométrie incontrolées, ce qui rend ce catalyseur inadapté pour la fluidisation du polymère. En outre, ce type de catalyseur présente un mauvais pofil cinétique qui condamne son utilisation à un procédé en phase gazeuse.

La même critique peut être faite aux catalyseurs contenant un composé organo phosphoré, préparés sensiblement dans les mêmes conditions, comme dans les brevets japonais 53.1276 et 54.39487.

L'objet du catalyseur selon l'invention est de posséder : un bon profil cinétique, une granulométrie et une morphologie controlée. Ces qualités du catalyseur permettent de fabriquer un polymère possédant une bonne masse volumique apparente. Ce catalyseur permet également le contrôle granulométrique du polymère, ce dernier étant sensiblement la réplique morphologique du catalyseur.

Le catalyseur selon l'invention contenant au moins un métal de transition, un composé du magnésium et un halogène est caractérisé en ce qu'il contient un composé organique du phosphore et que l'ensemble est imprégné sur un support de morphologie contrôlée.

Les catalyseurs de type Ziegler imprégnés sur support, tel que silice ou polyoléfine, sont connus; toutefois ces catalyseurs possèdent une forte activité catalytique initiale qui décroît très rapidement. De façon inexpliquée la combinaison du composé organique phophoré et du support de morphologie contrôlée dans ce type de catalyseur Ziegler, permet de réaliser un catalyseur dont le comportement cinétique est caractérisé par une monté progressive de l'activité avec un maintien de l'activité en palier relativement stable. L'intérêt d'un tel comportement cinétique est que les grains de catalyseur n'éclatent pas sous la pression dûe aux chaînes de polymères en croissance. L'absence d'un pic d'activité lors des premières minutes de la réaction se traduit également par une exothermicité controlée de la polymérisation et donc, diminue considérablement la possibilité d'une prise en masse par fusion du polymère défavorable à une mise en oeuvre en phase gazeuse. Grâce à ce comportement, à la température de polymérisation, on conserve la morphologie et la granulométrie contrôlées du catalyseur ce qui ce répercute sur l'amélioration de la morphologie du polymère finale.

Si on tente d'expliquer ce résultat inattendu, uniquement à titre d'information et sans en faire une caractéristique de l'invention, on suppose que l'aptitude des composés organiques phoshporés à dissoudre le composé du magnésium permet un voie particulièrement efficace d'imprégnation des supports. Ainsi le composé organique phosphoré de l'art antérieur ne jouerait-il plus uniquement le rôle de donner d'électrons, mains d'une sorte de lubrifiant et de dispersant des principes actifs du catalyseur sur le support qui permettrait un meilleur contrôle de l'activité catalytique particulièrement au cours des premières minutes de la réaction lors de l'activation du métal de transition par le cocatalyseur associé.

Les composés de magnésium entrant dans la composition du catalyseur répondent habituellement à la formule :

$$Mg\,X_n\,(OR)_{2-n}$$

dans laquelle :

n est une valeur de 0 et 2

X est un halogène et plus particulièrement le chlore

R est l'hydrogène ou un radical hydrocarboné aliphatique cyclique ou non, ou aromatique contenant de 1 à 20 atomes de carbone.

Le métal de transition est choisi parmi les éléments tels que le zirconium, le vanadium ou le chrome, avec une préférence pour le titane. Dans le catalyseur, ce métal de transition provient d'un composé de formule initiale

$$Me\,X_n\,(OR)_{4-n} \text{ avec } 0 \leq n \leq 4$$

ou $Me\,O_n\,X_m$ avec $1 \leq n \leq 3$

et $0 \leq m \leq 3$

et ou Me représente le métal de transition, X un halogène et plus particulièrement le chlore et R un radical hydrocarboné, tel que défini précédemment.

Le composé organique du phosphore entrant dans la composition du catalyseur contient au moins une liaison simple phosphore-oxygène et/ou au moins une double liaison phosphore-oxygène. Il est favorablement choisi parmi les phosphates, les phosphonates, les phosphites, les phosphines oxydes. Les produits particulièrement recommandés sont choisis parmi les phosphates d'alkyles.

Le support sur lequel sont imprégnés les principes actifs du catalyseur est choisi parmi les matériaux poreux et inertes organiques ou inorganiques connus pour cet usage.

Les supports inorganiques peuvent être choisis parmi les supports minéraux tels que : silices ou alumines. Pour les supports organiques on peut choisir parmi les composés issus d'une réaction de polymérisation ou de copolymérisation tels que les polyoléfines et les polyamides. Ces supports font habituellement l'objet d'un traitement thermique ou chimique de deshydratation.

En outre il est recommandé que ces supports possèdent des caractéristiques granulométriques et morphologiques définis. Les supports inorganiques possèdent habituellement des surfaces spécifiques déterminées par adsorption isotherme d'azote mesurée à la température d'ébullition de l'azote (méthode BET) comprises entre 200 et 400m$^2$/g, avec un volume poreux compris entre 1 et 2,5 cm$^3$/g, le diamètre moyen des pores étant compris de préférence entre $5.10^{-3}$ et $2.10^{-2}$ µm (50 et 200 Angströms). Ces supports inorganiques, habituellement choisis parmi les supports minéraux sphériques, sont formés de particules de diamètre moyen de préférence compris entre 20 et 400 µm mieux entre 20 et 200 µm (microns). Les supports organiques sphériques possèdent habituellement des surfaces spécifiques comprises entre 1 et 30 m$^2$/g avec un volume poreux compris entre 0,1 et 1cm$^3$/g, le diamètre moyen des pores étant compris de préférence entre 0,02 et 2 µm (200 et 20.000 Angströms). Ces supports organiques sont formés de particules de diamètre moyen de préférence compris entre 20 et 400 µm (microns).

De façon globale on prépare le catalyseur en imprégnant le support d'une solution limpide constituée du mélange du composé de magnésium et du composé organique du phosphore. Le support imprégné est ensuite traité thermiquement en présence du composé de métal de transition puis récupéré après lavage et séchage selon les procédés habituels.

La dissolution du composé de magnésium s'effectue en présence ou non d'un diluant, généralement un diluant hydrocarboné ou aliphatique. La température de réaction est comprise entre 20 et 200°C et mieux entre 70 et 120°C. Le rapport molaire entre le composé organique du phosphore et le composé du magnésium calculé en phosphore sur magnésium est compris entre 2 et 10 et mieux entre 2 et 4.

Le support peut être imprégné de la solution obtenue par voie sèche par saturation de pores ou par voie humide. L'imprégnation par voie sèche peut se faire en introduisant goutte à goutte la solution précédente dans un réacteur où le support à imprégner est mis en fluidisation par agitation ou par flux de gaz inerte. La quantité de solution introduite est telle que, pour éviter tout phénomène de mottage, on se trouve toujours en deça du volume poreux total du support utilisé.

L'imprégnation par voie humide consiste à imprégner les supports en suspension dans la solution, éventuellement diluée de solvant, des composés organiques du phosphore et du magnésium à une température habituellement inférieure à 200°C et même moins s'agissant des supports organiques.

L'addition du composé de métal de transition peut se faire après l'étape d'imprégnation du support par la solution initiale. Elle peut également se fair simultanément à celle-ci. Dans la première hypothèse, l'addition peut se faire par imprégnation dans les mêmes conditions que pour l'imprégnation des composés du phosphore et du magnésium. La quantité de composé du métal de transition dans le catalyseur, comptée en rapport molaire du métal de transition sur le phosphore, est comprise entre 0,5 et 100.

Dans les conditions habituelles, le catalyseur supporté formé est lavé avec de préférence un hydrocarbure, tel que l'hexane, puis récupéré par filtration.

De nombreuses variantes aux procédés décrits d'imprégnation du support sont envisageables. Par exemple, il est possible dans le cas d'utilisation de composé de métal de transition solide de le mettre en solution ou en suspension dans le milieu des composés de phosphore et de magnésium. Dans ce cas et après imprégnation du support, il n'est pas exclu de procéder à un deuxième imprégnation de métal de transition. De même, après une imprégnation du support par la solution du composé du phosphore et du magnésium en présence de diluant, il peut être recommandé de procéder à l'évaporation du diluant avant le traitement par le composé de métal de transition. Au cours de traitement par le composé du métal de transition des taux de solide élevés dans les liquides de traitement sont recommandés ; des quantités de matières sèches comprises 0,5 et 2 grammes par millilitre de solution sont recommandées.

Aux composants essentiels cités du catalyseur selon l'invention peuvent être associés les adjuvants classiques connus tels que donneur ou accepteur d'électrons, et cocatalyseur choisi parmi les alkylaluminiums.

Le donneur ou accepteur d'électrons est un composé organique liquide ou solide connu pour entrer dans la composition de ces catalyseurs. Le donneur d'électrons peut être un composé mono ou polyfonctionnel avantageusement choisi parmi les acides carboxyliques aliphatiques ou aromatiques et leurs esters alcoyliques, les éthers aliphatiques ou cycliques, les cétones, les esters vinyliques, les dérivés acryliques, en particulier acrylates ou méthacrylates d'alcoyle, les silanes, les amines. Conviennent notamment comme donneurs d'électrons les composés tels que paratuolate de méthyle, benzoate d'éthyle, acétate d'éthyle ou de butyle, éther éthylique, para-anisate d'éthyle, dibutylphtalate, dioctylphatalate, diisobutylphtalate, tétrahydrofuranne, dioxane, acétone, méthylisobutylcétone, acétate de vinyle, méthacrylate de méthyle, les silanes tels que phényltriéthoxysilane, les alcoxysilanes, aromatiques ou aliphatiques.

L'accepteur d'électrons est un acide de Lewis, choisi de préférence parmi le chlorure d'aluminum, le trifluorore de bore, le chloranile ou encore les alkylaluminiums et alkylmagnésiums. Les alkylaluminiums sont généralement choisis parmi les composés de formule $Al(R'')_c X'_d H_e$ connus comme cocatalyseurs dans laquelle :

- X' est Cl, ou R'', représentant un radical hydrocarboné saturé de $C_1$ à $C_{14}$ avec : $0 < d < 1,5 ; 0 < e < 1$ et $c + d + e = 3$

Comme exemples, on peut citer: $Al(C_2H_5)_3$, $Al(C_2H_5)_2Cl$, $Al(C_4H_9)_3$, $Al_2(C_2H_5)_3Cl_3$, $Al(C_4H_9)_2H$, $Al(C_6H_{13})_3$, $Al(C_8H_{17})_3$, $Al(C_2H_5)_2H$ et $Al(C_2H_5)_2(OC_2H_5)$.

Les catalyseurs selon l'invention sont particulièrement adaptés pour la polymérisation en phase gazeuse de l'ethylène. Les conditions de polymérisations en phase gazeuse sont celles habituellement recommandées dans la littérature. On opère généralement à une température inférieure au point de fusion Tf du polymère à synthétiser, plus particulièrement entre 20°C et (Tf-5°C). La pression partielle de l'éthylène et éventuellement des autres monomères hydrocarbonés présents dans le réacteur est fixée de telle façon qu'à la température de la réaction tous les réactifs soient à l'état gazeux. La pression partielle d'hydrogène est ajustée en fonction de l'indice de fluidité visé pour le polymère.

Les exemples suivants illustrent de façon non limitative l'objet de l'invention.

## Exemple 1

22 mmoles de $MgCl_2$ anhydre et 47 mmoles de trioctyle phosphate sont mis à réagir sous atmosphère d'azote dans 50 ml d'heptane. La température est montée progressivement à 100°C en 2 heures. A la solution limpide obtenue on additionne 10g de polyéthylène de diamètre moyen 300 µm (microns) préalablement traités par une solution de trihexylaluminium (THA) à 10 mM/l à chaud pendant 15 minutes. 20 ml de $TiCl_4$ sont alors versés goutte à goutte et la réaction est maintenue 30 minutes à 85°C. On récupère après lavage à l'heptane puis séchage un catalyseur supporté sur polyéthylène avec un taux de titane de 500 ppm.

## Exemple 2

19,4 g. de chlorure de magnésium sont dissous dans 110 ml de tributyle phosphate en présence de 300 ml d'heptane dans les mêmes conditions de durée et température que dans l'exemple 1. A 60 ml de la solution ainsi obtenue on additionne 7g de polyéthylène d'une surface spécifique 2,7 m²/g avec un volume poreux de 0,44 cm³/g et un diamètre moyen de 325 µm (microns). On laisse sous agitation à 70°C pendant 2 heures. Après filtration du liquide surnageant on additionne 20 ml de $TiCl_4$ qu'on laisse réagir avec le support pendant 1 heure à 80°C puis 45 minutes à 100°C. Le solide catalytique obtenu est lavé abondamment par de l'heptane sec jusqu'à ce que l'on ne détecte plus de trace acide dans la solution de lavage. Après séchage, on récupère un solide catalytique jaune pâle contenant 1,1% de titane et 1,6% de magnésium.

## Exemple 3

Dans un réacteur en verre purgé par de l'azote on introduit successivement et sous agitation 9,8 g de chlorure de magnésium et 55 ml de tributyle phosphate. Après traitement à 80°C pendant 90 minutes puis 100°C pendant 180 minutes on obtient une solution limpide. A 37 ml de cette solution on ajoute progressivement du polyéthylène, identique à celui de l'Exemple 2, jusqu'à ce que la quasi totalité du liquide soit absorbée sur le support. On laisse sous agitation modérée pendant 60 mn. à 70°C, 20ml de $TiCl_4$ sont alors additionnés. La réaction entre le métal de transition et le support est maintenue pendant 2 heures à 83°C. Après lavage à l'hexane et séchage du solide, on récupère un solide catalytique dont les teneurs en titane et en magnésium sont respectivement de 1,64% et 3,9%.

## Exemple 4

40 ml de complexe entre le chlorure de magnésium et le tributyle phosphate préparés selon l'Exemple 3, sont dilués par 20 ml d'hexane, 15g de polyéthylène, identique à celui de l'Exemple 2, sont alors additionnés et laissés à 70°C pendant 90 minutes. Après réaction, l'hydrocarbure saturé est éliminé par distillation et on ajoute alors 10 ml de $TiCl_4$. On laisse 2h30 à 86°C. Après lavage et séchage on récupère un solide catalytique jaune contenant respectivement 0,7% et 1,47% de titane et de magnésium.

## Exemple 5

15 ml de solution de chlorure de magnésium et de tributyle phosphate préparée selon l'Exemple 3 sont dilués dans 50 ml d'hexane, 21g de polyéthylène sphérique, identique à celui de l'Exemple 2 mais de volume poreux de 0,64 cm³/g, tamisés entre 80 et 160 µm (microns) sont alors mis en suspension et portés à 66°C pendant 6 heures; 500 microlitres d'une solution de triéthylaluminium dilué à 20% dans de l'heptane, sont ensuite additionnés avant distillation de la totalité du solvant hydrocarboné léger et 50 mmoles de TiCl₄ sont ajoutées. On laisse sous agitation pendant 6 heures à 70°C.

On lave alors l'hexane jusqu'à ce que l'on ne détecte plus de composés acides dans la solution de lavage. Après séchage, le solide catalytique récupéré contient à l'analyse 1,85% de titane et 2,9% de magnésium.

Exemple 6

Dans un ballon purgé de son air, on met à température ambiante 9 g de chlorure de magnésium et 53g de tributyle phosphate. On laisse dans ces conditions 1 nuit sous agitation magnétique. A 10 ml de la solution recueillie, on additionne 10 g de silice séchée thermiquement et chimiquement dans des conditions habituelles de surface spécifique égale à 300 m²/g avec un volume poreux de 1,43 cm³/g, le diamètre moyen des particules étant d'environ 70 µm (microns). A ce mélange on additionne une quantité suffisante d'hexane pour le mettre en suspension. On laisse sous faible agitation 3 heures à 70°C. Après évaporation du solvant on récupère un solide pulvérulent. A celui-ci on ajoute 4 ml de TiCl₄ dilué dans 20 ml d'heptane. Le traitement est maintenu 6 heures à 80°C. On récupère après lavage et séchage un solide catalytique comportant 2,5% de titane.

Exemple 7 (comparatif)

A 100 ml de solution de chlorure de magnésium et de tributyle phosphate dilué par de l'heptane préparés selon l'exemple 2, on additionne 21 ml de TiCl₄ progressivement à température ambiante. On laisse sous agitation pendant 5 heures à 100°C. Un solide jaune précipite puis est isolé après lavage et séchage, l'analyse du titane et du magnésium donne des taux respectifs de 5,5 % et de 14,36 %.

Exemple 8 (comparatif)

A 8 g de polyéthylène, identique à celui de l'Exemple 5, on additionne successivement sous atmosphère inerte 100 cc. de tétrahydrofurane et 3,8 g. de chlorure de magnésium anhydre. Après une agitation à 260°C pendant 15 minutes du mélange, on ajoute goutte à goutte 1 ml de TiCl₄. Le tétrahydrofuran en excès est distilé après 30 minutes de réaction. On récupère un solide jaune contenant 3,4 % de titane.

Exemple 9

Essais des catalyseurs en polymérisation de l'éthylène en phase gazeuse.
Dans un réacteur de polymérisation du type lit agité en acier inoxydable de 2,5 litres, on introduit sous azote 50g. de polymère comme charge initiale. Après une purge de toutes traces d'air ou d'humidité par des mises successives sous vide puis sous pression d'azote à 80°C, on additionne à cette charge 2 ml de trihexylaluminium (THA), puis les pressions partielles d'éthylène et d'hydrogène. La pression totale est égale à 18 bars et la température fixée à 85°C.

Par l'intermédiaire d'un sas, sous pression d'azote de 40 bars on introduit entre 50 et quelques centaines de mg. de catalyseur solide dans le milieu réactionnel. La pression totale atteint 20 bars. Cette pression est maintenue constante par adjonction d'éthylène pendant toute la durée de la polymérisation. La vitesse d'agitation est fixée à 500 t/min. En fin de réaction, on arrête l'agitation et abaisse la température vers 20°C, la pression étant abaissée vers 10⁵Pa (1 atmosphère).

La productivité est calculée en kilogrammes de polyéthylène par gramme de titane de catalyseur mis en oeuvre.
Les conditions chiffrées de polymérisation et les résultats obtenus sont donnés dans le tableau suivant.
Les valeurs de masse volumique apparente tassée (MVA) donnée mesurées en g/ml sont obtenues selon la norme DIN 53194.
La mesure de coulabilité est effectuée selon la norme ASTM D 1895-69.
En annexe, pour les essais 5.1 et 8.1 sont données les courbes d'activité des catalyseurs. Elles illustrent la différence de comportement des catalyseurs selon l'invention par rapport à celui du catalyseur comparatif. La croissance progressive de l'activité suivie d'un haut niveau d'activité relativement stable au cours du temps est confirmée.

En annexe sont également données les photos du catalyseur des exemples 5 et 8 au grossissement 50. Ces photos sont à comparer aux photos au grossissement 10 correspondantes des polymères des essais 5.1 et 8.1. De ces photos, on constate qu'au niveau du grain de polymère final, la morphologie a été conservée dans le cas du catalyseur préparé selon l'invention, alors que pour le catalyseur comparatif, de même morphologie initiale, les particules de polymère ont éclatté.

| Catalyseur | N° Essais | Quantité de catalyseur mis en oeuvre en mg | Cocatalyseur | Quantité de cocatalyseur en mM d'aluminium | Pression éthylène (atmosphérique) Pa | Pression $H_2$ (atmosphère) Pa | T° C de réaction | Durée min. | Productivité kg polyéthylène par g de titane | Titane résiduel en ppm | MVA g/ml | Coulabilité en sec. |
|---|---|---|---|---|---|---|---|---|---|---|---|---|
| 1 | 1.1 | 940 | THA | 5,8 | $1,4.10^6$(14) | 0 | 82 | 60 | 350 | 2,9 | 0,395 | 21 |
| 2 | 2.1 | 230 | THA | 8,6 | $1,4.10^6$(14) | 0 | 85 | 120 | 122 | 8,1 | 0,380 | 22 |
| 3 | 3.1 | 174 | THA | 5,8 | $1,4.10^6$(14) | 0 | 84 | 120 | 277 | 3,6 | 0,405 | 23 |
| 3 | 3.2 | 110 | THA | 5,8 | $1,4.10^6$(14) | $1.10^5$(1) | 85 | 120 | 82 | 12,0 | 0,420 | 21 |
| 3 | 3.3 | 300 | THA | 5,8 | $1,4.10^6$(14) | $2.10^5$(2) | 85 | 120 | 57 | 17,5 | 0,418 | 22 |
| 4 | 4.1 | 190 | THA | 5,8 | $1,4.10^6$(14) | 0 | 85 | 60 | 244 | 4,1 | 0,410 | 21 |
| 4 | 4.2 | 120 | THA-DEAC | 7,0 | $1,4.10^6$(14) | 0 | 84 | 230 | 190 | 5,3 | 0,438 | 22 |
| 4 | 4.3 | 840 | THA | 5,8 | $1,4.10^6$(14) | $1.10^5$(1) | 85 | 120 | 73 | 13,6 | 0,406 | 22 |
| 5 | 5.1 | 400 | THA | 5,8 | $1,4.10^6$(14) | 0 | 87 | 120 | 80 | 12,5 | 0,426 | 21 |
| 5 | 5.2 | 330 | TOA | 4,5 | $1,4.10^6$(14) | 0 | 84 | 120 | 93 | 10,7 | 0,421 | 22 |
| 6 | 6.1 | 180 | THA | 5,8 | $1,4.10^6$(14) | 0 | 85 | 120 | 107 | 9,3 | 0,338 | 25 |
| 7 | 7.1 | 400 | THA | 5,8 | $1,4.10^6$(14) | $3.10^5$(3) | 85 | prise en masse | | | | |
| 8 | 8.1 | 268 | THA | 5,8 | $1,4.10^6$(14) | $2.10^5$(2) | 85 | 120 | 72 | 13,9 | 0,306 | 26 |

THA = Trihexylaluminium    DEAC = Chlorure de diéthylaluminium    TOA = Trioctylaluminium

EP 0 239 474 B1

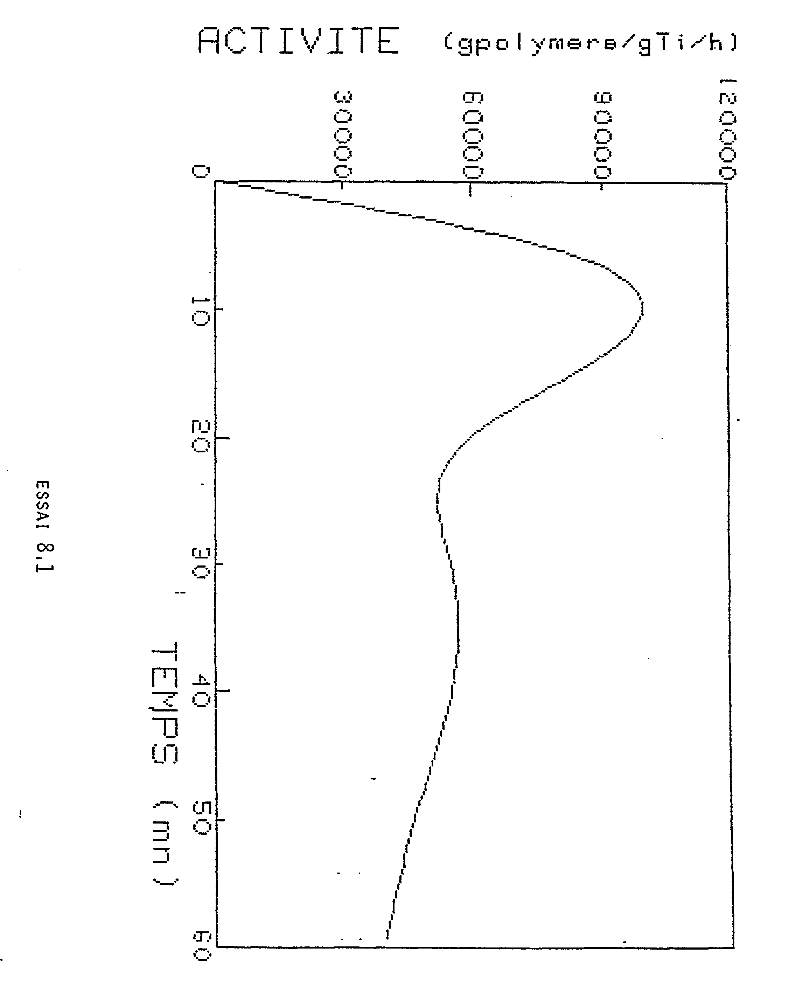

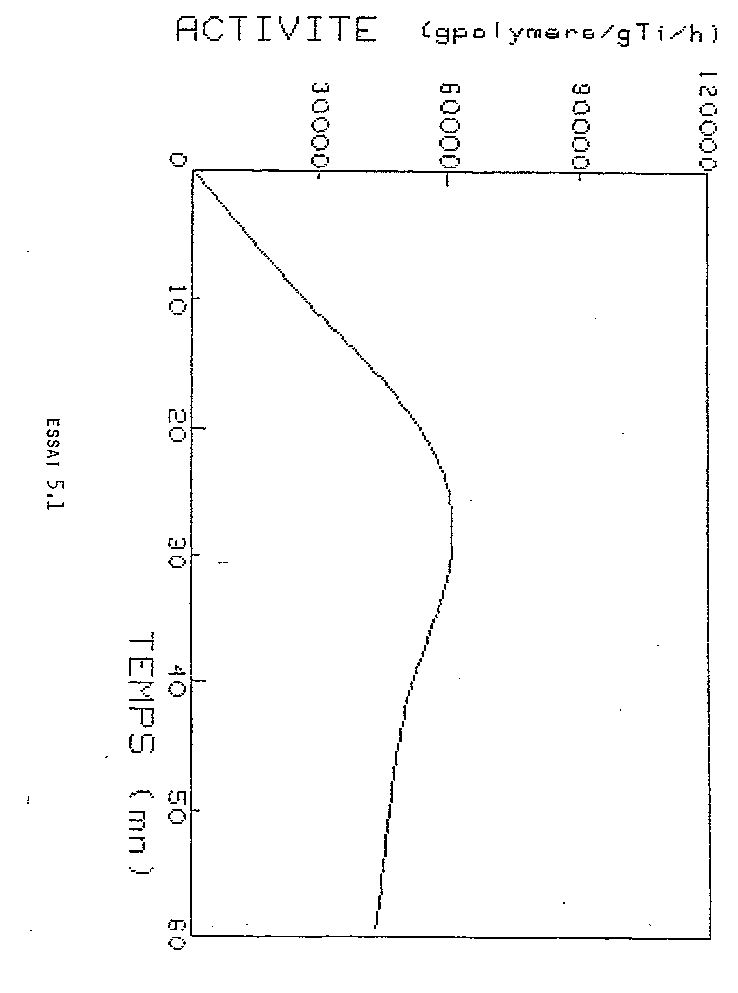

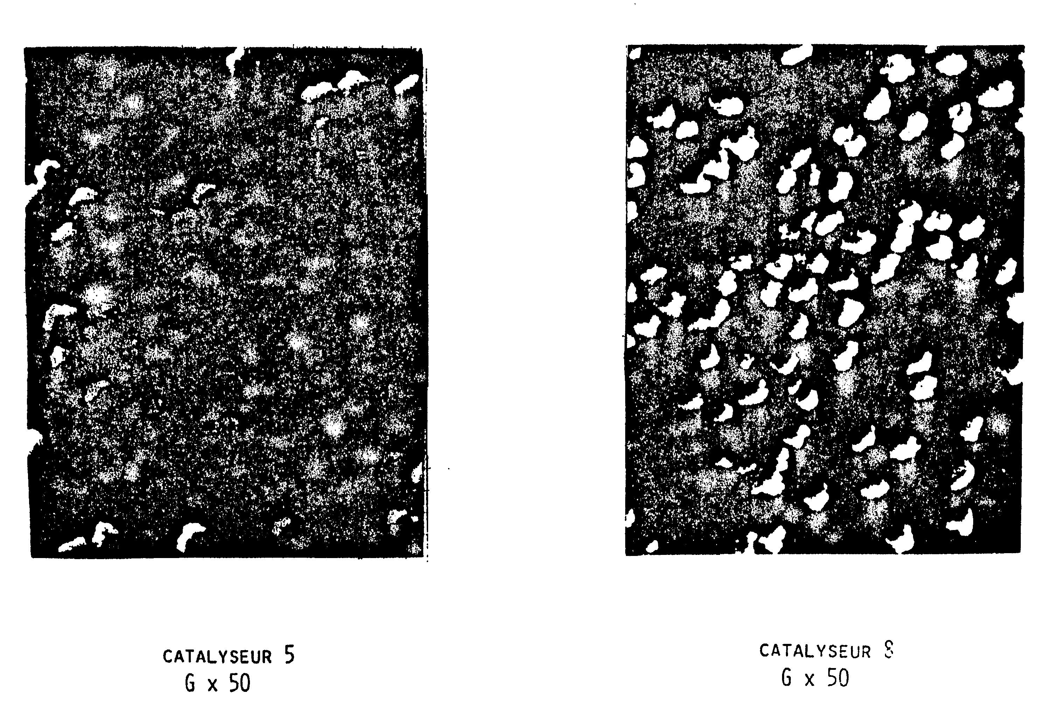

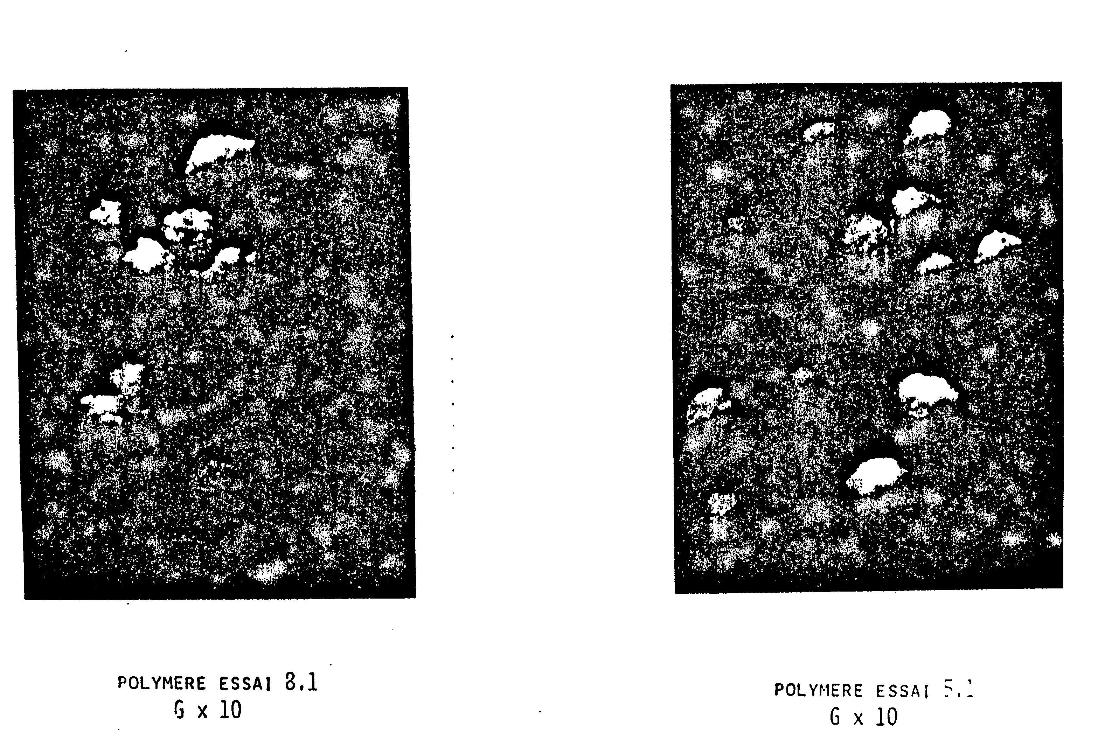

## Revendications

1. Catalyseur de polymérisation de l'éthylène en phase gazeuse contenant au moins un métal de transition, un composé du magnésium et un halogène caractérisé en ce qu'il contient un composé organique du phosphore, l'ensemble étant imprégné sur un support organique ou inorganique poreux et inerte.

2. Catalyseur de polymérisation selon la revendication 1 caractérisé en ce que le composé organique du phosphore est choisi parmi les composés organiques du phosphore contenant au moins une liaison simple phosphore-oxygène et/ou au moins une double liaison phosphore-oxygène.

3. Catalyseur selon l'une des revendications 1 à 2 caractérisé en ce que le support inorganique est choisi parmi les supports minéraux sphériques de surfaces spécifiques comprises entre 200 et 400 $m^2/g$ avec un volume poreux compris entre 1 et 2,5 $cm^3/g$.

4. Catalyseur selon l'une des revendications 1 à 2 caractérisé en ce que le support organique est choisi parmi les supports organiques sphériques de surfaces spécifiques comprises entre 1 et 30 $m^2/g$ avec un volume poreux compris entre 0,1 et 1 $cm^3/g$.

5. Catalyseur selon l'une des revendications 1 à 4 caractérisé en ce que les supports sont constitués de particules de diamètre moyen compris entre 20 et 400 µm (microns).

6. Catalyseur selon l'une des revendications 1 à 5 caractérisé en ce que le rapport molaire entre le composé organique du phosphore et le composé du magnésium calculé en phosphore sur magnésium est compris entre 2 et 10.

7. Catalyseur selon l'une des revendications 1 à 6 caractérisé en ce que la quantité de composé de métal de transition comptée en rapport molaire du métal de transition sur le phosphore est compris entre 0,5 et 100.

8. Procédé de fabrication d'un catalyseur halogéné de polymérisation de l'éthylène, selon l'une des revendications 1 à 7, en phase gazeuse à partir d'au moins un métal de transition, un composé du magnésium, un composé organique du phosphore caractérisé en ce qu'on imprègne un support organique ou inorganique d'une solution limpide d'un mélange constitué d'un composé du magnésium de formule $Mg\, X_n (OR)_{2-n}$ dans laquelle n est une valeur de 0 à 2, X est un halogène et R l'hydrogène ou un radical hydrocarboné contenant de 1 à 20 atomes de carbone et d'un composé organique du phosphore contenant au moins une liaison simple phosphore oxygène et/ou au moins une double liaison phosphore-oxygène et en ce que l'on imprègne le support d'un composé de métal de transition de formule $Me\, X_n (OR)_{4-n}$ avec $0 < n < 4$ $Me\, O_n\, X_m$ avec $1 < n < 3$ et $0 < m < 3$ et ou Me représente le métal de transition, X un halogène et R un radical hydrocarboné comme défini ci-dessus.

9. Procédé selon la revendication 8 caractérisé en ce que le composé de métal de transition est associé à la solution du composé de magnésium et du composé organique du phosphore.

10. Procédé selon l'une des revendications 8 à 9 caractérisé en ce que le support est imprégné d'une solution préparé à une température comprise entre 20 et 200°C contenant un composé du magnésium et un composé organique du phosphore dans un rapport molaire calculé en phosphore sur magnésium compris entre 2 et 10.

11. Procédé selon l'une des revendications 8 à 10 caractérisé en ce que le support est imprégné d'un composé de métal de transition compté en rapport molaire du métal de transition sur le phosphore compris entre 0,5 et 100.

12. Procédé selon l'une des revendications 8 à 11 caractérisé en ce que le support est choisi parmi les supports inorganiques de la revendication 3.

13. Procédé selon l'une des revendications 8 à 11 caractérisé en ce que le support organique est choisi parmi les supports de la revendication 4.

14. Procédé de polymérisation en phase gazeuse de l'éthylène en présence d'un catalyseur selon l'une des revendications 1 à 7.

## Claims

1. A catalyst for the polymerization of ethylene in the gaseous phase, containing at least one transition metal, one compound of magnesium and one halogen, characterized in that it contains an organic compound of phosphorus, the whole being impregnated on a porous and inert organic or inorganic support.

2. A polymerization catalyst according to claim 1, characterized in that the organic compound of phosphorus is selected from the organic compounds of phosphorus containing at least one single phosphorus-oxygen bond and/or at least one phosphorus-oxygen double bond.

3. A catalyst according to one of claims 1 or 2, characterized in that the inorganic support is selected from the spherical mineral supports having specific surfaces of between 200 and 400 $m^2/g$ with a pore volume of between 1 and 2.5 $cm^3/g$.

4. A catalyst according to one of claims 1 or 2, characterized in that the organic support is selected from the spherical organic supports having specific surfaces of between 1 and 30 $m^2/g$ with a pore volume of between 0.1 and 1 $cm^3/g$.

5. A catalyst according to one of claims 1 to 4, characterized in that the supports are formed by particles having a mean diameter of between 20 and 400 µm (microns).

6. A catalyst according to one of claims 1 to 5, characterized in that the molar ratio between the organic compound of phosphorus and the magnesium compound, calculated in phosphorus: magnesium, is between 2 and 10.

7. A catalyst according to one of claims 1 to 6, characterized in that the quantity of transition metal compound, counted in the transition metal: phosphorus molar ratio, is between 0.5 and 100.

8. A process for the production of a halogenated catalyst for the polymerization of ethylene, according to one of claims 1 to 7, in the gaseous phase from at least one transition metal, a magnesium compound and an organic compound of phosporus, characterized in that an organic or inorganic support is impregnated with a clear solution of a mixture formed by a magnesium compound having the formula $MgX_n(OR)_{2-n}$, where n is a value between 0 and 2, X is a halogen and R is hydrogen or a hydrocarbon radical containing 1 to 20 atoms of carbon, and an organic compound of phosphorus containing at least one single phosphorus-oxygen bond and/or at least one phosphorus-oxygen double bond, and the support is impregnated with a transition metal compound having the formula $MeX_n(OR)_{4-n}$ with $0 < n < 4$ or $MeO_nX_m$ with $1 < n < 3$ and $0 < m < 3$ and where Me denotes the transition metal, X a halogen and R a hydrocarbon radical as defined hereinbefore.

9. A process according to claim 8, characterized in that the transition metal compound is associated with the solution of the magnesium compound and the organic compound of phosphorus.

10. A process according to one of claims 8 or 9, characterized in that the support is impregnated with a solution prepared at a temperature of between 20 and 200°C and containing a magnesium compound and an organic compound of phosphorus in a phosphorus: magnesium ratio of between 2 and 10.

11. A process according to one of claims 8 to 10, characterized in that the support is impregnated with a transition metal compound counted in transition metal: phosphorus molar ratio of between 0.5 and 100.

12. A process according to one of claims 8 to 11 characterized in that the support is selected from the inorganic supports set forth in claim 3.

13. A process according to one of claims 8 to 11, characterized in that the organic support is selected from the supports set forth in claim 4.

14. A process for the polymerization of ethylene in the gaseous phase in the presence of a catalyst according to one of claims 1 to 7.

## Patentansprüche

1. Katalysator zur Ethylenpolymerisation in der Gasphase, enthaltend mindestens ein Übergangsmetall eine Magnesiumverbindung und ein Halogen, dadurch gekennzeichnet, daß er eine organische Phosphorverbindung enthält und das Ganze auf einem porösen und inerten, organischen oder anorganischen Träger abgeschieden ist.

2. Polymerisationskatalysator nach Anspruch 1, dadurch gekennzeichnet, daß die organische Phosphorverbindung aus den organischen Phosphorverbindungen, die mindestens eine einfache Phosphor-Sauerstoff-Bindung und/oder mindestens eine Phosphor-Sauerstoff-Doppelbindung enthalten, ausgewählt ist.

3. Katalysator nach einem der Ansprüche 1 oder 2, dadurch gekennzeichnet, dass der anorganische Träger aus den kugelförmigen mineralischen Trägern mit spezifischen Oberflächen zwischen 200 und 400 cm²/g mit einem Porenvolumen zwischen 1 und 2,5 cm³/g ausgewählt ist.

4. Katalysator nach einem der Ansprüche 1 oder 2, dadurch gekennzeichnet, daß der organische Träger aus den kugelförmigen organischen Trägern mit spezifischen Oberflächen zwischen 1 und 30 cm²/g mit einem Porenvolumen zwischen 0,1 und 1 cm³/g ausgewählt ist.

5. Katalysator nach einem der Ansprüche 1 bis 4, dadurch gekennzeichnet, daß die Träger aus Teilchen, deren mittlere Durchmesser zwischen 20 und 400 μm (micron) betragen, bestehen.

6. Katalysator nach einem der Ansprüche 1 bis 5, dadurch gekennzeichnet, daß das Molverhältnis zwischen der organischen Phosphorverbindung und der Magnesiumverbindung, berechnet als Phosphor zu Magnesium, zwischen 2 und 10 beträgt.

7. Katalysator nach einem der Ansprüche 1 bis 6, dadurch gekennzeichnet, daß die Menge der Übergangsmetallverbindung, berechnet als Molverhältnis des Übergangsmetalls zu Phosphor, zwischen 0,5 und 100 beträgt.

8. Verfahren zur Herstellung eines halogenierten Katalysators zur Ethylenpolymerisation nach einem der Ansprüche 1 bis 7 in der Gasphase, ausgehend von mindestens einem Übergangsmetall, einer Magnesiumverbindung und einer organischen Phosphorverbindung, dadurch gekennzeichnet, daß man einen organischen oder anorganischen Träger mit einer transparenten Lösung eines Gemischs imprägniert, das aus einer Magnesiumverbindung der Formel $MgXn(OR)_{2-n}$, in der n einen Wert von 0 bis 2 hat, X ein Halogen und R Wasserstoff oder einen 1 bis 20 Kohlenstoffatome enthaltender Kohlenwasserstoffrest ist und einer organischen Phosphorverbindung, die mindestens eine einfache Phosphor-Sauerstoff-Bindung und/oder mindestens eine Phosphor-Sauerstoff-Doppelbindung enthält, besteht und daß man den Träger mit einer Übergangsmetallverbindung der Formel $MeXn(OR)_{4-n}$ mit 0 n 4 oder $MeO_nX_m$ mit 1 n 3 und 0 m 3 und in der Me das Übergangsmetall, X ein Halogen und R einen kohlenwasserstoffhaltigen Rest, wie oben definiert, bedeutet, imprägniert.

9. Verfahren nach Anspruch 8, dadurch gekennzeichnet, daß die Übergangsmetallverbindung in einer Lösung der Magnesiumverbindung und der organischen Phosphorverbindung gebunden ist.

10. Verfahren nach einem der Ansprüche 8 oder 9, dadurch gekennzeichnet, daß der Träger mit einer Lösung, die bei einer Temperatur zwischen 20 und 200°C hergestellt worden ist und eine Magnesiumverbindung sowie eine organische Phosphorverbindung in einem Molverhältnis zwischen 2 und 10, berechnet als Phosphor zu Magnesium, enthält, imprägniert ist.

11. Verfahren nach einem der Ansprüche 8 bis 10, dadurch gekennzeichnet, daß der Träger mit einer Übergangsmetallverbindung, berechnet als Molverhältnis des Übergangsmetalls zum Phosphor zwischen 0,5 und 100, imprägniert ist.

12. Verfahren nach einem der Ansprüche 8 bis 11, dadurch gekennzeichnet, daß der Träger aus den anorganischen Trägern des Anspruchs 3 ausgewählt ist.

13. Verfahren nach einem der Ansprüche 8 bis 11, dadurch gekennzeichnet, daß der organische Träger aus den Trägern des Anspruchs 4 ausgewählt ist.

14. Verfahren zur Gasphasenpolymerisation des Ethylens in Gegenwart eines Katalysators nach einem der Ansprüche 1 bis 7.

ESSAI 8.1

ACTIVITE (gpolymere/gTi/h)

ESSAI 5.1

TEMPS (mn)

CATALYSEUR 5
G x 50

CATALYSEUR 3
G x 50

POLYMERE ESSAI 8.1
G x 10

POLYMERE ESSAI 5.2
G x 10